# EUROPEAN PATENT APPLICATION

(11) **EP 0 901 235 A2**
(43) Date of publication of application: **10.03.1999**
(21) Application number: 98116232.4
(22) Date of filing: 27.08.1998
(51) Int. Cl.: H04B 1/707

(54) **Matched filter and timing detection method**

(30) Priority: 03.09.1997 JP 254270/97
(71) Applicant: MATSUSHITA ELECTRIC INDUSTRIAL CO., LTD., Kadoma-shi, Osaka-fu, 571 (JP)
(72) Inventor: Takakusaki, Keiji, Yokohama-shi, Kanagawa 224 (JP); Suzuki, Hidetoshi, Yokohama-shi, Kanagawa 224 (JP)
(74) Representative: Grünecker, Kinkeldey, Stockmair & Schwanhäusser Anwaltssozietät

(57) **Abstract**

Tap coefficient string generator 103 converts to parallel a set of spreading codes generated by spreading code generator 102 for every one symbol, then gives them to the tap coefficient write terminal of programmable digital filter 106 via tap coefficient string write bus 104 and updates the tap coefficient of programmable digital filter 106 for every one information symbol. Upon the completion of reception of a section spread by the series of the Nth symbol, the shift register in programmable digital filter 106 is filled with the received signals of that section. If the series of the Nth symbol counted from the start of the long code is set as the tap coefficient of the programmable digital filter, correlative peaks appear at the matched filter output.

## Description

### BACKGROUND OF THE INVENTION

### Field of the Invention

The present invention relates to matched filter and timing detection method used for digital mobile radio communication apparatus. Description of the Related Art

In CDMA (Code Division Multiple Access) system data transmissions, it is necessary to despread a signal which has been spread and modulated by the radio communication apparatus on the receiving side. This despreading is performed by correlation detection through digital processing by means of a sliding correlator and matched filter, etc. Above all, the matched filter has an advantage over the sliding correlator in that the receivedr has shorter synchronization time of the spreading code in the receivedr than the sliding correlator.

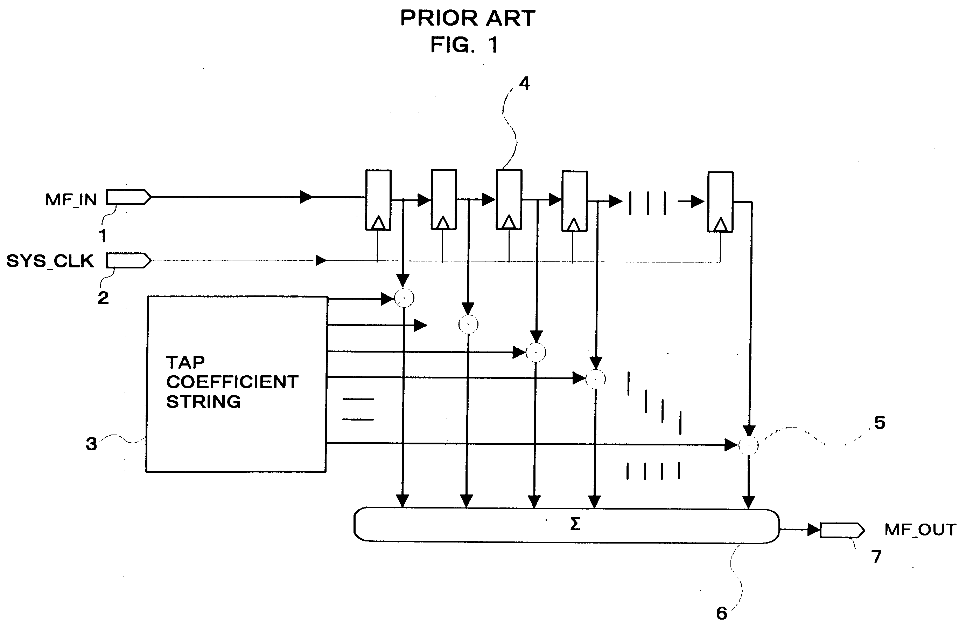

FIG.1 is a schematic diagram showing the configuration of a programmable digital filter in a conventional matched filter. Received baseband signal input terminal 1 is a terminal to input a received baseband signal string. System clock input terminal 2 is a terminal to input a system clock to a plurality of shift registers 4 connected in parallel.

Tap coefficient registers 3 store tap coefficients by which respective digital multipliers 5 are multiplied. Shift registers 4 store the received baseband signal strings input from received baseband signal input terminal 1. Digital adder 6 adds up values obtained by multiplying each register value by a tap coefficient.
Matched filter output terminal 7 is a terminal to output the value added by digital adder 6.

The operation of the matched filter configured as shown above is explained below. A received baseband signal string input from received baseband signal input terminal 1 advances through shift registers 4 by one stage on every rise of the system clock. Each register value in shift registers 4 is multiplied by a tap coefficient stored in tap coefficient registers 3 by digital multiplier 5. All the multiplication results are added by digital adder 6 and the resulting value is output from output terminal 7.

Through such operations, the value output from output terminal 7 changes on every rise of the system clock. Here, it is assumed that the received baseband signal string is a spread spectrum signal, the system clock cycle is the chip cycle or a fraction of the number of over-samples of the chip cycle, and the number of stages of shift registers 4 is the length of a spreading code per one information symbol or the length of a spreading code per one information symbol multiplied by the number of over-samples.

Furthermore, in this matched filter, a large output appears at matched filter output terminal 7 when the information symbol of the received signal changes, that is, every time the start of the spreading code reaches the final stage of shift registers 4, and only a small output appears at matched filter output terminal 7 at other times. This large output is called "correlative peak." It is possible to demodulate the received signal by selecting only the correlative peaks from the output strings from the matched filter output terminal 7 and judging whether it is positive or negative.

When a plurality of received signals arrive at different timings in a multiplexed delay transmission environment, two or more correlative peaks appear per symbol. Synthesizing respective correlative peak values allows a demodulated output with a high signal to noise ratio to be obtained. This system is called "RAKE synthesis."

However, since the matched filter with the configuration above has a fixed tap coefficient value by which each register value is multiplied, it is only applicable to a received signal spread by a short code (spreading code whose cycle is equal to a one-information symbol cycle), it has the problem of not being applicable to a received signal spread by a long code (spreading code whose cycle is an integer times the information symbol cycle).

### SUMMARY OF THE INVENTION

It is an objective of the present invention to provide a matched filter which will handle not only a received signal spread by a short code but also handle a received signal spread by a long code.

This objective is achieved by a matched filter which updates the tap coefficient in a specific cycle, then carries out operation processing using said tap coefficient on a signal string received through at least one digital filter and detects the timing of the correlative peaks.

### BRIEF DESCRIPTION OF THE DRAWINGS

FIG.1 illustrates a schematic diagram showing a programmable digital filter of a conventional matched filter;
FIG.2 illustrates a block diagram showing the configuration of a matched filter according to a first embodiment of the present invention;
FIG.3 illustrates a schematic diagram showing the configuration of a programmable digital filter in the matched filter according to the first embodiment of the present invention;
FIG.4 illustrates a timing chart describing operation of the matched filter according to the first embodiment of the present invention;
FIG.5 illustrates a block diagram showing the configuration of a matched filter according to a second embodiment of the present invention;
FIG.6 illustrates a block diagram showing the configuration of a matched filter according to a third embodiment of the present invention;
FIG.7 illustrates a timing chart describing operation of the matched filter according to the third embodiment of the present invention; and
FIG.8 illustrates a block diagram showing the configuration of a matched filter according to a fourth embodiment of the present invention.

### DETAILED DESCRIPTION OF THE PREFERRED EMBODIMENTS

The matched filter according to an embodiment of the present invention includes a tap coefficient updating section for updating the tap coefficient in a specific cycle and at least one digital filter that carries out operation processing using the tap coefficient on a received signal string and obtains a filter output.

The timing detection method according to an embodiment of the present invention updates the tap coefficient in a specific cycle, carries out operation processing using said tap coefficient on a received signal string and detects the timing of the correlative peaks.

According to these configurations, the value of the tap coefficient by which each register value is multiplied can vary, making it possible to handle not only a received signal spread by a short code but also a received signal spread by a long code.

In the matched filter according to the above embodiment, it is preferable that the specific cycle be a prescribed number of symbols. This configuration can handle even a case where the distribution of the incoming timings of received signals extends over a plurality of information symbols. That is, it can handle a delay corresponding to a plurality of information symbols.

In the matched filter according to the above embodiment, it is preferable that each digital filter switch the tap coefficient with a lag corresponding to a prescribed number of symbols. These configurations can also reliably handle the case where the received timings are distributed over a plurality of symbols.

In the matched filter according to the above embodiment, it is preferable to comprise a timing control means for changing the timing at which the tap coefficient is updated. Furthermore, in the timing detection method according to the above embodiment, it is preferable that the timing at which the tap coefficient is updated be changed. These configurations can handle even a case where the received timing greatly varies with time. In this case, it is preferable for the timing control means to change the timing at which the tap coefficient is updated so that it should not coincide with the timing of the correlative peaks of the filter output.

The present invention provides a base station apparatus equipped with the matched filter of the embodiment above and a mobile station apparatus equipped with the matched filter of the embodiment above. According to these configurations, it is possible to implement a base station apparatus and mobile station apparatus which can transmit a received signal spread by either a short code or long code.

The RAKE synthesis method in an embodiment of the present invention has a configuration to obtain a demodulated output by synthesizing the correlative peak values according to the timing detection method of the embodiment above. This configuration allows a demodulated output with a high signal to noise ratio for a received signal spread by both a short code and long code.

With reference now to the attached drawings, the embodiments of the present invention are explained in detail below.

### (Embodiment 1)

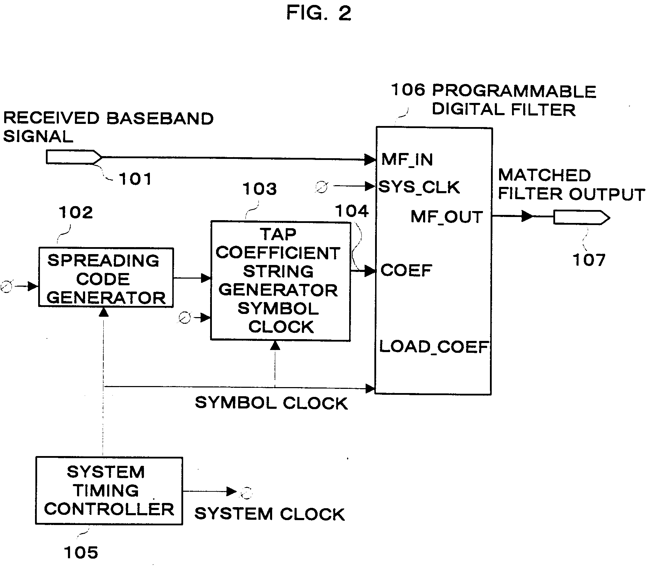

FIG.2 illustrates a block diagram showing the configuration of a matched filter according to Embodiment 1 of the present invention. Received baseband signal input terminal 101 is a terminal to input the received baseband signal string. Spreading code generator 102 generates a spreading code at the timing according to a system clock and symbol clock generated by system timing controller 105.

Tap coefficient string generator 103 converts to parallel a set of spreading codes generated by spreading code generator 102 for every one symbol and gives them to the tap coefficient write terminal of programmable digital filter 106 via tap coefficient string write bus 104. System timing controller 105 generates a system clock and symbol clock. Further, matched filter output terminal 107 is a terminal to output a signal digitally processed by the matched filter.

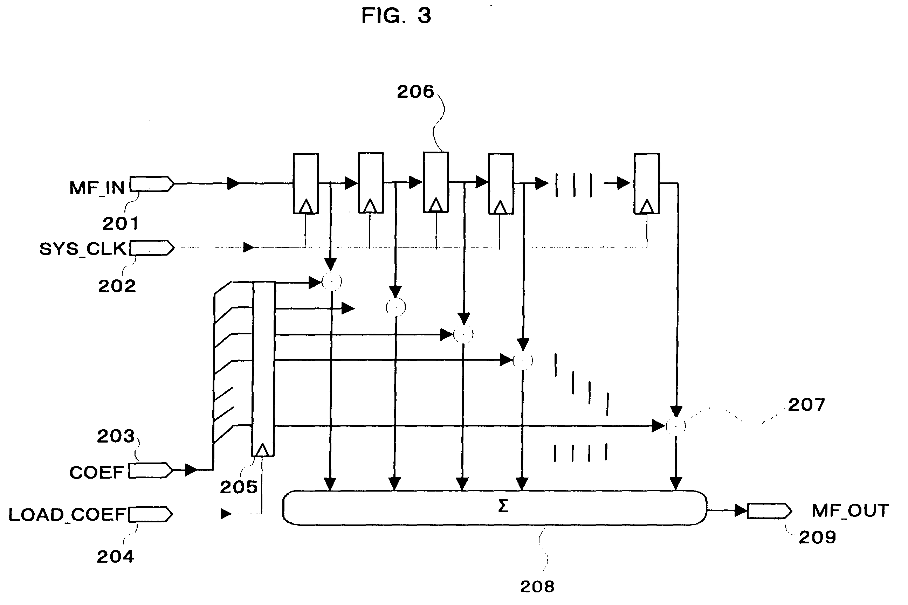

FIG.3 illustrates a schematic diagram showing the internal configuration of the programmable digital filter in FIG.2. The programmable digital filter mainly comprises received baseband signal input terminal 201 to input a received baseband signal string, system clock input terminal 202 to input a system clock to a plurality of shift registers 206 installed in parallel, tap coefficient write terminal 203 to give the tap coefficient value in parallel, tap coefficient write pulse input terminal 204 to input a pulse when updating the tap coefficient, tap coefficient registers 205 that store the updated tap coefficients, shift registers 206 that store received baseband signal strings input from received baseband signal input terminal 201, digital multiplier 207 that multiplies each register value by the tap coefficient, digital adder 208 that adds each register value multiplied by the tap coefficient and matched filter output terminal 209 to output the value added by digital adder 208.

The operation of the matched filter configured as shown above is explained below. First, a received baseband signal input from received baseband signal input terminal 101 is input to an input terminal of programmable digital filter 106. At this time, spreading code generator 102 generates a spreading code at the timing according to a system clock and symbol clock generated by system timing controller 105. The spreading codes generated by spreading code generator 102 may be either long codes or short codes.

Tap coefficient string generator 103 converts to parallel a set of spreading codes generated by spreading code generator 102 for every one symbol and gives them to the tap coefficient write terminal of programmable digital filter 106 via tap coefficient string write bus 104. At this time, it gives a symbol clock to the tap coefficient write pulse input terminal of programmable digital filter 106. In this way, the tap coefficient of programmable digital filter 106 is updated every one cycle, that is, every one information symbol.

The operation of programmable digital filter 106 is as follows. As shown in FIG.3, a received baseband signal string input from received baseband signal input terminal 201 advances through shift registers 206 by one stage on every rise of the system clock. The value of each of shift registers 206 is multiplied by the tap coefficient stored in tap coefficient register 205 by digital multiplier 207. The all multiplication results are added by digital multiplier 207 and the result is output from output terminal 209 as a matched filter output.

This operation changes the value output to output terminal 209 on every rise of the system clock. The tap coefficients stored in tap coefficient registers 205 can be changed by giving tap coefficient write pulse input terminal 204 a pulse while giving tap coefficient write terminal 203 the tap coefficient value in parallel. That is, this configuration can make variable the tap coefficient by which the received baseband signal string is multiplied.

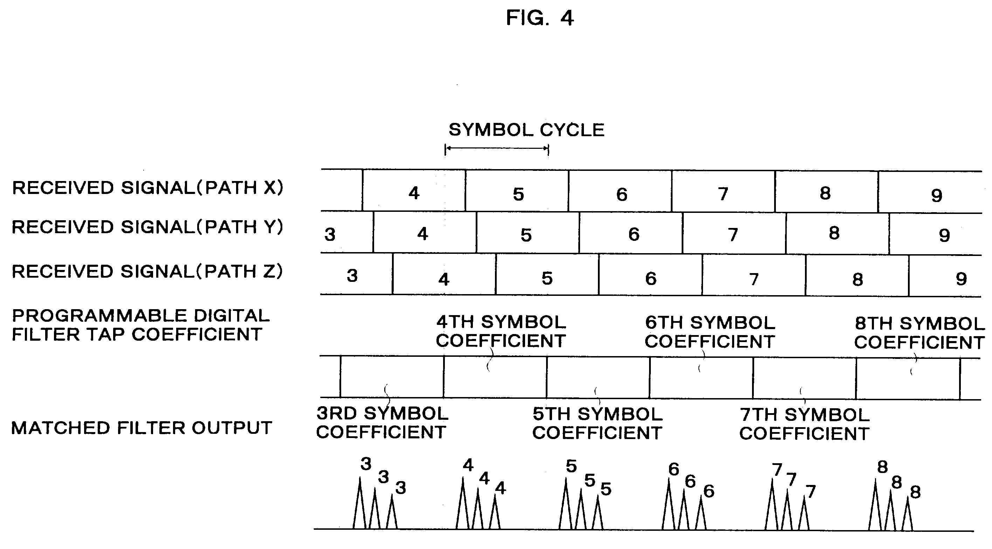

The timing chart of the operation above is shown in FIG.4. The numbers in the timing chart of a received signal indicate the series of the symbol number counted from the start of a long code in which the symbol section is spread. For example, the moment the reception of the section spread by the series of the Nth symbol is completed, the shift register in programmable digital filter 106 is filled with the received signals of the section. At this time, if the series of the Nth symbol counted from the start of a long code is set as the tap coefficient of the programmable digital filter, a correlative peak appears at the output of the matched filter. FIG.4 shows an example case where 3 received signals with different timings are arriving, and therefore 3 correlative peaks appear.

Here, the timing of a symbol clock which is the timing of updating the tap coefficient (broken line in FIG.4) must be set before all correlative peaks of received signals. If the matched filter in the present embodiment is introduced to a base station apparatus, the correlative peaks always appear after the tap coefficient updating timing, and therefore (if an uplink signal without any propagation delay is received, the correlative peaks lie at the same positions as those with the tap coefficient updating timing), the condition above is satisfied.

As shown above, the present embodiment can make the tap coefficient variable, making it possible to implement a matched filter by handling not only a received signal spread by a short code but also a received signal spread by a long code.

### (Embodiment 2)

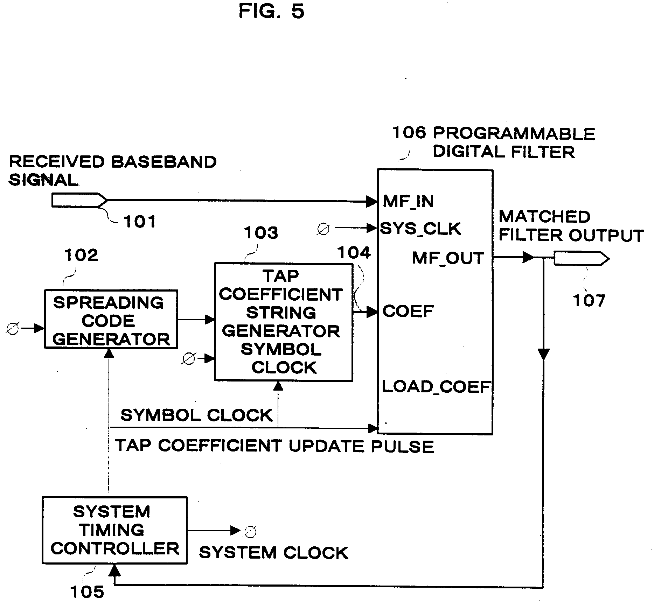

FIG.5 illustrates a block diagram showing the configuration of the matched filter according to Embodiment 2 of the present invention. The matched filter in the present embodiment mainly comprises received baseband signal input terminal 101 to input a received baseband signal string, spreading code generator 102 that generates spread codes at the timing according to a system clock and symbol clock generated by system timing controller 105, tap coefficient string generator 103 that converts to parallel a set of spreading codes generated by spreading code generator 102 for every one symbol and gives them to the tap coefficient write terminal, tap coefficient string write bus 104 that connects tap coefficient string generator 103 and the programmable digital filter, system timing controller 105 that generates a system clock and symbol clock, programmable digital filter 106 having a configuration shown in FIG.3, matched filter output terminal 107 to output a signal digitally processed by the matched filter and filter output feedback bus 408 to send the timing of each correlative peak to system timing controller 405.

The operation of the matched filter having the configuration above is explained below. First, the received baseband signal input from received baseband signal input terminal 101 is input to the input terminal of programmable digital filter 106. At this time, spreading code generator 102 generates spreading codes at the timing according to a system clock and symbol clock generated by system timing controller 105. The spreading codes generated by the spreading code generator 102 may be either long codes or short codes.

Tap coefficient string generator 103 converts to parallel a set of spreading codes generated by spreading code generator 102 for every one symbol and gives them to the tap coefficient write terminal of programmable digital filter 106 via tap coefficient string write bus 104. At this time, it gives the tap coefficient write pulse input terminal of programmable digital filter 106 a tap coefficient update pulse settable independently of the symbol clock. This allows the tap coefficient of programmable digital filter 106 to be updated for every one information symbol.

If the received signal incoming timing varies with time, system timing controller 105 recognizes the timing of each correlative peak via filter output feedback bus 108 and changes the tap coefficient update timing ensuring that the tap coefficient update timing does not coincide with the timing of each correlative peak.

The operation of programmable digital filter 106 is the same as that of Embodiment 1. The timing chart of the above operation is as shown in FIG.4, the same as that of Embodiment 1.

As seen above, the present Embodiment allows the tap coefficient to be variable and changes the tap coefficient update timing so that the tap coefficient update timing may not coincide with the timing of each correlative peak, making it possible to handle not only a received signal spread by a short code but also handle a received signal spread by a long code, implementing a matched filter which can handle even a case where the receiving timing greatly varies with time.

### (Embodiment 3)

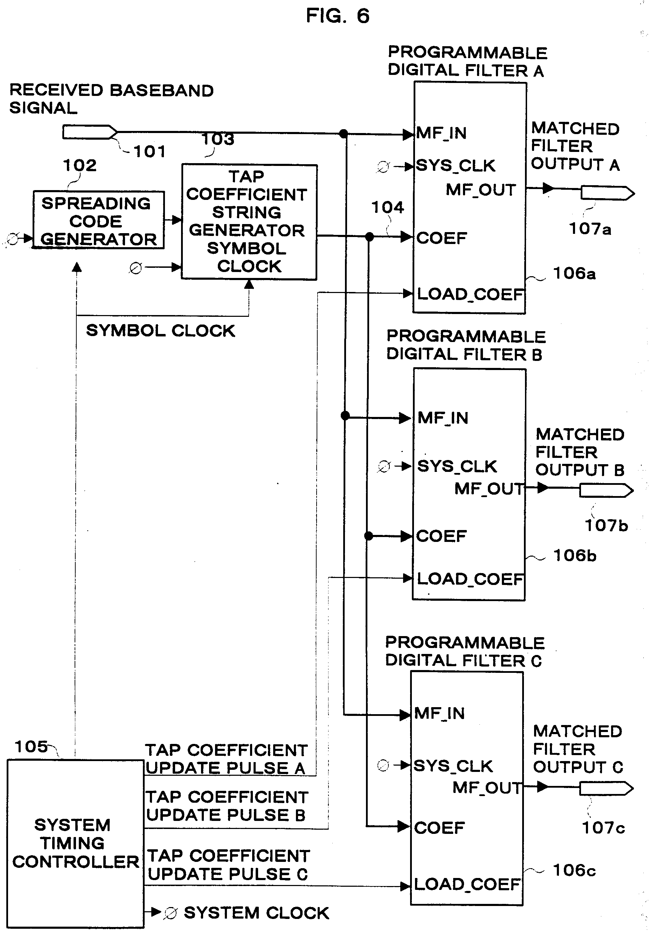

FIG.6 illustrates a block diagram showing the configuration of a matched filter according to Embodiment 3 of the present invention. By way of example, FIG.6 shows the configuration of a matched filter that can handle a delay corresponding to 3 symbols.

The matched filter of the present Embodiment mainly comprises received baseband signal input terminal 101 to input a received baseband signal string, spreading code generator 102 that generates spreading codes at the timing according to system clocks and symbol clocks generated by system timing controller 105, tap coefficient string generator 103 that converts to parallel a set of spreading codes generated by spreading code generator 102 for every one symbol and gives them to the tap coefficient write terminal, tap coefficient string write bus 104 that connects tap coefficient string generator 103 and the programmable digital filter, system timing controller 105 that generates system clocks and symbol clocks, and programmable digital filter A 106a, programmable digital filter B 106b and programmable digital filter C 106c having a configuration shown in FIG.3, and matched filter A output terminal 107a, matched filter B output terminal 107b and matched filter C output terminal 107c which are used to output signals digitally processed by A, B, and C, respectively.

In these matched filters, a received baseband signal string input from received baseband signal input terminal 101 is input to programmable digital filter A 106a, programmable digital filter B 106b, and programmable digital filter C 106c, respectively and tap coefficients created by tap coefficient string generator 103 are also input to programmable digital filter A 106a, programmable digital filter B 106b, and programmable digital filter C 106c, respectively.

The operation of the matched filters having the configuration above is explained below. First, a received baseband signal input from received baseband signal input terminal 101 is input to programmable digital filter A 106a, programmable digital filter B 106b, and programmable digital filter C 106c, respectively. At this time, spreading code generator 102 generates spreading codes at the timing according to a system clock and symbol clock generated by system timing controller 105. The spreading codes generated by spreading code generator 102 may be either long codes or short codes.

Tap coefficient string generator 103 converts to parallel a set of spreading codes generated by spreading code generator 102 for every one symbol and gives them to the tap coefficient write terminal of programmable digital filter A 106a, B 106b and C 106c via tap coefficient string write bus 104. At this time, it gives a tap coefficient update pulse settable independently of the symbol clock to the tap coefficient write pulse input terminal of programmable digital filter A 106a, B 106b and C 106c. The operation of programmable digital filter A 106a, B 106b and C 106c are the same as that of Embodiment 1.

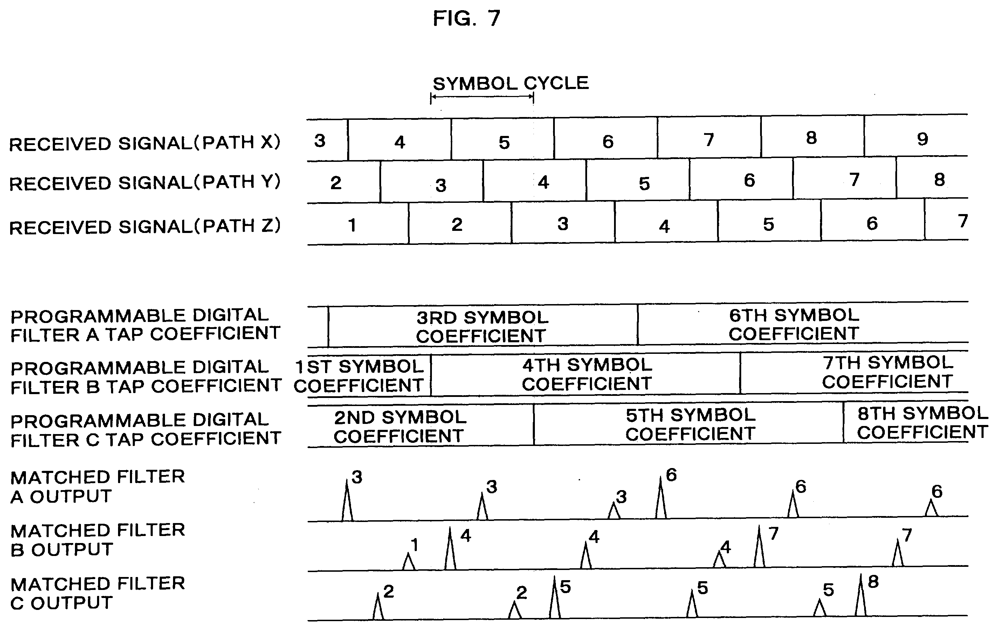

The timing chart of the operation above is shown in FIG.7. In FIG.7, 3 received signals with different timings are arriving and the received timing is distributed over 3 symbols.

The numbers in the timing chart of a received signal indicate the series of the symbol number counted from the start of a long code in which the symbol section is spread. For example, the moment the reception of the section spread by the series of the Nth symbol is completed, the shift register in the programmable digital filter is filled with the received signals in the section. At this time, if the series of the Nth symbol counted from the start of a long code is set as the tap coefficient of the programmable digital filter, a correlative peak appears at the output of the matched filter.

When a received timing is distributed over M symbols, it is necessary to retain the tap coefficient of the programmable digital filter for M symbols. Therefore, M programmable digital filters are provided in parallel and the respective tap coefficients are switched with a lag for every one symbol as shown in FIG.7. Such control results in the appearance of correlative peaks corresponding to the same information symbol over a plurality of symbols at the outputs of programmable digital filters A 106a, B 106b, and C 106c.

Performing a RAKE combining of the correlative peak values appearing at the outputs of the programmable digital filters between a tap coefficient update timing and the next tap coefficient update timing allows demodulation output with a high signal to noise ratio to be obtained.

Here, the timing (broken line in FIG.7) of the symbol clock which is the tap coefficient update timing must be set before the correlative peaks for all received signals. If the matched filters of the present Embodiment are introduced to a base station apparatus, the correlative peaks always appear after the tap coefficient update timing (if an uplink signal without any propagation delay is received, correlative peaks lie at the same positions as those with the tap coefficient updating timing), the condition above is satisfied.

As shown above, the present embodiment allows the tap coefficient to be variable and retains the tap coefficient for a plurality of symbols, making it possible to implement a matched filter that can handle not only a received signal spread by a short code but also a received signal spread by a long code and that can handle even a case where the received signal incoming timings are distributed over a plurality of information symbols.

### (Embodiment 4)

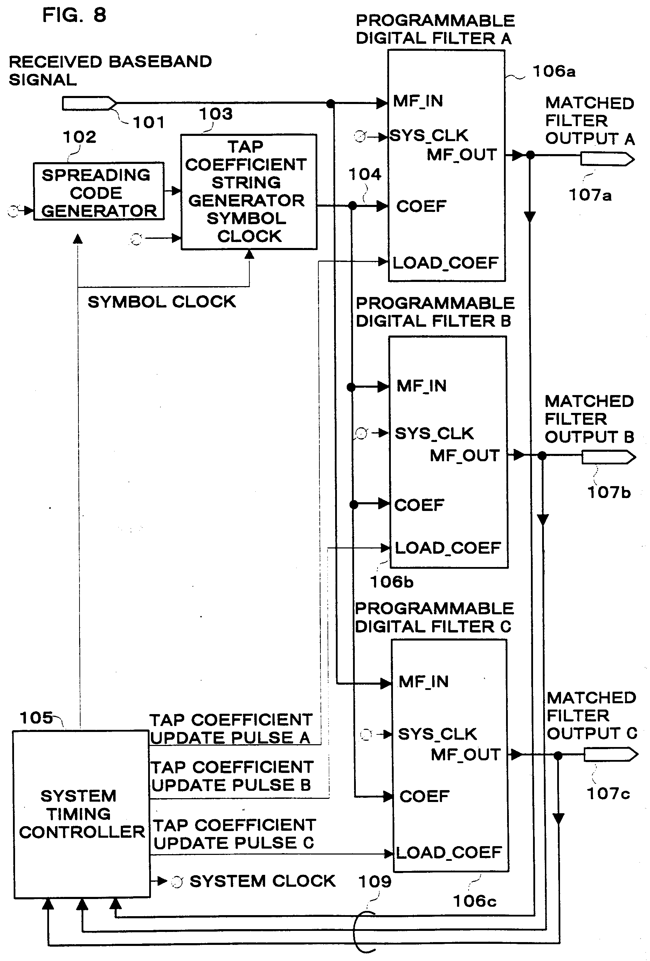

FIG.8 illustrates a block diagram showing the configuration of a matched filter according to Embodiment 4 of the present invention. FIG.8 also illustrates the configuration of a matched filter applicable to a delay corresponding to 3 symbols.

The matched filter in the present embodiment mainly comprises received baseband signal input terminal 101 to input a received baseband signal string, spreading code generator 102 that generates spreading codes at the timing according to a system clock and symbol clock generated by system timing controller 105, tap coefficient string generator 103 that converts to parallel a set of spreading codes generated by spreading code generator 102 for every one symbol and gives them to the tap coefficient write terminal, tap coefficient string write bus 104 that connects tap coefficient string generator 103 and programmable digital filter A 106a, programmable digital filter B 106b and programmable digital filter C 106c having a configuration shown in FIG.3, and matched filter A output terminal 107a, matched filter B output terminal 107b and matched filter C output terminal 107c which are used to output signals digitally processed by A, B, and C, respectively, and filter output feedback bus 109 to send each correlative peak timing to system timing controller 105.

In these matched filters, a received baseband signal string input from received baseband signal input terminal 101 is input to programmable digital filter A 106a, programmable digital filter B 106b, and programmable digital filter C 106c, respectively and tap coefficients created by tap coefficient string generator 103 are also input to programmable digital filter A 106a, programmable digital filter B 106b, and programmable digital filter C 106c, respectively.

The operation of the matched filters with the configuration above is explained below. First, a received baseband signal input from received baseband signal input terminal 101 is input to programmable digital filter A 106a, programmable digital filter B 106b, and programmable digital filter C 106c, respectively. At this time, spreading code generator 102 generates spreading codes at the timing according to a system clock and symbol clock generated by system timing controller 105. The spreading codes generated by spreading code generator 102 may be either long codes or short codes.

Tap coefficient string generator 103 converts to parallel a set of spreading codes generated by spreading code generator 102 for every one symbol and gives them to the tap coefficient write terminal of programmable digital filter A 106a, B 106b and C 106c via tap coefficient string write bus 104. At this time, it gives a tap coefficient update pulse settable independently of the symbol clock to the tap coefficient write pulse input terminal of programmable digital filter A 106a, B 106b and C 106c.

If the received signal incoming timing varies with time, system timing controller 105 recognizes the timing of each correlative peak via filter output feedback bus 109 and changes the tap coefficient update timing ensuring that the tap coefficient update timing does not coincide with the timing of each correlative peak.

The operation of programmable digital filter A 106a, B 106b and C 106c is the same as that of Embodiment 1. The timing charts of the above operations are as shown in FIG. 7, the same that of as Embodiment 3.

As seen above, the present Embodiment allows the tap coefficient to be variable and retains the tap coefficient for a plurality of symbols and at the same time changes the tap coefficient update timing so that the tap coefficient update timing may not coincide with the timing of each correlative peak, implementing a matched filter which makes it possible to handle not only a received signal spread by a short code but also handle a received signal spread by a long code, handle even a case where the received signal incoming timing is distributed over a plurality of information symbols and also handle a case where the received timing greatly varies with time.

The matched filters described in Embodiment 1 and Embodiment 4 above can be installed in a base station apparatus or mobile station apparatus in a mobile communication system. This implements a base station apparatus or mobile station apparatus which can transmit received signals spread by either a short code or long code.

As explained above, the matched filters and timing detection method in the present invention are capable of handling received signals spread not only by short codes but also by long codes in the CDMA system data transmission.

## Claims

1. A matched filter comprising:
tap coefficient update means(103) for updating a tap coefficient in a specific cycle; and
at least one digital filter(106) that obtains filter output by carrying out operation processing on a received signal string using a tap coefficient.

2. The matched filter according to claim 1, wherein the specific cycle is a prescribed number of symbols.

3. The matched filter according to claim 2, wherein each digital filter(106) switches the tap coefficient with a lag of a prescribed number of symbols.

4. The matched filter according to claim 1, further comprising timing control means(105) for changing the timing to update the tap coefficient.

5. The matched filter according to claim 4, wherein the timing control means(105) changes the timing to update the tap coefficient so that the timing to update the tap coefficient is not coincide with the timing of the correlative peaks of the filter output.

6. A base station apparatus equipped with a matched filter, wherein said matched filter comprising:
tap coefficient update means(103) for updating a tap coefficient in a specific cycle; and
at least one digital filter(106) that obtains filter output by carrying out operation processing on the received signal string using the tap coefficient.

7. A mobile station apparatus equipped with a matched filter, wherein said matched filter comprising:
tap coefficient update means(103) for updating a tap coefficient in a specific cycle; and
at least one digital filter(106) that obtains filter output by carrying out operation processing on the received signal string using the tap coefficient.

8. A timing detection method comprising the steps of: updating a tap coefficient in a specific cycle ; and carrying out operation processing on a received signal string using said tap coefficient to detect the correlative peak timing.

9. The timing detection method according to claim 8, wherein each digital filter switches the tap coefficient with a lag of a prescribed number of symbols.

10. The timing detection method according to claim 8, further comprising a step of changing the timing of updating the tap coefficient.

11. The timing detection method according to claim 10, which updates the tap coefficient so that the timing of updating the tap coefficient is not coincide with the timing of the correlative peaks of the filter output.

12. A RAKE combining method comprising the steps of:
updating a tap coefficient in a specific cycle; and
obtaining demodulated output by synthesizing the values of correlative peaks obtained by carrying out operation processing on the signal string received from at least one digital filter using said tap coefficient.
